# EUROPÄISCHE PATENTSCHRIFT

(11) **EP 1 637 380 B1**
(45) Veröffentlichungstag und Bekanntmachung des Hinweises auf die Patenterteilung: **12.03.2014**
(21) Anmeldenummer: 05020371.0
(22) Anmeldetag: 19.09.2005
(51) Int. Cl.: B60J 7/20

(54) **Cabriolet-Fahrzeug mit Verkleidungsteilen**
Cabriolet vehicle with cover flaps
Véhicule du type cabriolet avec des volets

(30) Priorität: 21.09.2004 DE 102004045641
(43) Veröffentlichungstag der Anmeldung: 22.03.2006
(73) Patentinhaber: Valmet Automotive Oy, 23500 Uusikaupunki (FI)
(72) Erfinder: Habacker, Norbert, 49565 Bramsche (DE)
(74) Vertreter: Kronthaler, Schmidt & Coll.

(56) Entgegenhaltungen:
- DE-A1- 10 131 052
- DE-U1- 29 921 497
- US-A- 5 921 608

## Beschreibung

Die Erfindung betrifft ein Cabriolet-Fahrzeug mit einem bei seiner Öffnung zumindest teilweise unterhalb einer Eintrittsöffnung in der Karosserie ablegbaren Dach, wobei zumindest ein quer außen gelegener Teil der Eintrittsöffnung teilweise durch Verkleidungsteile abdeckbar ist, nach dem Oberbegriff des Anspruchs 1.

Es ist üblich, zumindest solche Verkleidungsteile, die nicht nur während der Dachbewegung, sondern auch bei geschlossenem Dach in ihrer Freigabestellung verbleiben, zum Erreichen dieser Freigabestellung aus einer bündig mit umgebenden Außenflächen liegenden Abdeckstellung abzusenken und sie unterhalb von Außenflächen optisch zu verbergen, um die Eintrittsöffnung möglichst vollständig freizugeben und dadurch beispielweise in quer außen liegenden Bereichen den Durchtritt seitlicher Gestängeteile des Daches zu ermöglichen.

Die DE 101 32 547 A1 zeigt eine mehrteilige und vollständige Verkleidung der Eintrittsöffnung, bei der quer außen liegende Verkleidungsteile jeweils über ein Viergelenkgestänge an der Karosserie angebunden und in eine der Fahrzeugmitte zugewandte und optisch verdeckte Freigabestellung um vertikale Achsen verschwenkbar sind. Eine solche Lösung erfordert einen hohen konstruktiven Aufwand und bewirkt durch die langen Gestängeteile eine Gewichtserhöhung. Das Öffnen oder Schließen der Verkleidungsteile benötigt aufgrund des großen Verlagerungsweges vergleichsweise viel Zeit.

Die DE 299 21 497 U1 zeigt eine mehrteilige Verkleidung der Eintrittsöffnung, bei der zwei Teilabschnitte dieser Verkleidung in ihrer Freigabestellung fluchtend zueinander in einer gemeinsamen Ebene vertikal stehen und dabei gegenüber ihrer verkleidenden Stellung quer in Richtung einer vertikalen Fahrzeuglängsmittelebene verlagert sind. Dadurch und durch ihre aufrechte Übereinanderlage wird in Freigabestellung der Insassenraum eingeschränkt. Auch bei geschlossenem Dach bleibt ein vom Insassenraum aus sichtbarer Teilabschnitt aufrecht stehen und stört somit den optischen Eindruck.

Der Erfindung liegt das Problem zugrunde, bei einem gattungsgemäßen Cabriolet-Fahrzeug eine möglichst platzsparende Halterung, insbesondere von außen liegenden Verkleidungsteilen in freigebender Stellung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 11 angegeben.

Mit der Erfindung ist eine besonders raumsparende Ablagemöglichkeit der Verkleidungsteile in ihrer freigebenden Stellung erreicht. Durch das Einfalten der Teilabschnitte gegeneinander kann das in die Karosserie abgesenkte Paket aus Teilabschnitten sehr schmal gehalten sein, so es beispielsweise neben Profilen seitlicher Dachgestängeteile gelagert werden kann, wo ansonsten kein Raum für ein vollständiges Verkleidungsteil zur Verfügung stünde.

Die Raumverbesserung gilt insbesondere, wenn die Teilabschnitte in freigebender Stellung nahezu hochkant und parallel zueinander stehen, wobei hierunter auch eine gegensinnig gewölbte Stellung der Teilabschnitte gegeneinander verstanden wird. Hierfür kann je nach Fahrzeug insbesondere ein Verlauf der Faltungskante zumindest nahezu parallel zur Fahrzeuglängsrichtung optimierend sein.

Dennoch können die Teilabschnitte in abdeckender Stellung fluchtend und horizontal nebeneinander liegen und eine Erscheinung wie einteilige Verkleidungsteile bieten.

Sehr vorteilhaft sind die Teilabschnitte hierbei von einem gemeinsamen Bezug übergriffen, so daß in Abdeckstellung eine durchgehende Optik ohne Sichtbarkeit der Faltungsmöglichkeit erreicht ist.

Eine Hubvorrichtung für die Verlagerung zwischen Freigabe- und Abdeckstellung ist konstruktiv einfach zu realisieren und ermöglicht den Verzicht auf Führungskulissen oder dergleichen Hilfsmittel.

Sofern die Teilabschnitte eines Verkleidungsteils im abdeckenden Auffaltungssinn vorgespannt sind und bei der Öffnung durch Zwangsführungen in die eingeklappte Stellung gezwungen werden, ist ein gesonderter Bewegungsmechanismus für das Auf- und Einfalten um die Faltungsachse entbehrlich.

Falls bei geöffnetem Dach das vordere, bei geschlossenem Dach mit einem Windschutzscheibenrahmen verbundene Dachende in gleicher Orientierung abgelegt ist und seine bei geschlossenem Dach nach oben weisende Seite eine optische Abschlußfläche für einen wesentlichen Teil des mittleren Bereichs der Eintrittsöffnung ausbildet, fällt dieses Dachende zu seinen Querseiten hin bei üblicher Fahrzeuggestaltung ab, so daß gerade in diesen Randbereichen die Verwendung erfindungsgemäßer Verkleidungsteile optisch und mechanisch gut zu verwirklichen ist.

Die Verkleidungsteile können dann bei geöffnetem Dach seitlich und zumindest teilweise oberhalb von seitlichen Rändern des vorderen Dachendes liegen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1: eine schematische, perspektivische und an der vertikalen Längsmittelebene sowie zum Fahrzeugbug und -heck abgebrochene Ansicht des hinteren Fahrzeugbereichs eines erfindungsgemäßen Cabriolet-Fahrzeugs bei in der Karosserie abgelegtem Dach und mit einem in Abdeckstellung liegenden Verkleidungsteil an jeder Querseite,
- Fig. 2: einen Schnitt entlang der Linie II- II-in Fig. 1,
- Fig. 3: eine ähnliche Ansicht wie Fig. 2 in angehobener, jedoch noch ausgefalteter Stellung der Teilabschnitte mit zusätzlich gestrichelt eingezeichneter Abdeckstellung des Verkleidungsteils,
- Fig. 4: eine ähnliche Ansicht wie Fig. 3 während des Einfaltens der Teilabschnitte gegeneinander mit zusätzlich gestrichelt eingezeichneter Abdeckstellung des Verkleidungsteils,
- Fig. 5: eine ähnliche Ansicht wie Fig. 4 in angehobener und vollständig eingefalteter Stellung der Teilabschnitte mit zusätzlich gestrichelt eingezeichneter Abdeckstellung des Verkleidungsteils,
- Fig. 6: eine ähnliche Ansicht wie Fig. 5 in jetzt jedoch abgesenkter Freigabestellung der Teilabschnitte mit zusätzlich gestrichelt eingezeichneter Abdeckstellung des Verkleidungsteils,
- Fig. 7: ein ähnliche Ansicht wie Fig. 2 eines alternativen Ausführungsbeispiels eines Verkleidungsteils mit nach oben einfaltbaren Teilabschnitten,
- Fig. 8: eine ähnliche Ansicht wie Fig. 7 während des Einfaltens und gleichzeitigen Absenkens der Teilabschnitte des Verkleidungsteils,
- Fig. 9: eine ähnliche Ansicht wie Fig. 8 während des weiteren Einfaltens und Absenkens der Teilabschnitte,
- Fig. 10: eine ähnliche Ansicht wie Fig. 9 in nahezu vollständig abgesenkter Stellung des Verkleidungsteils.

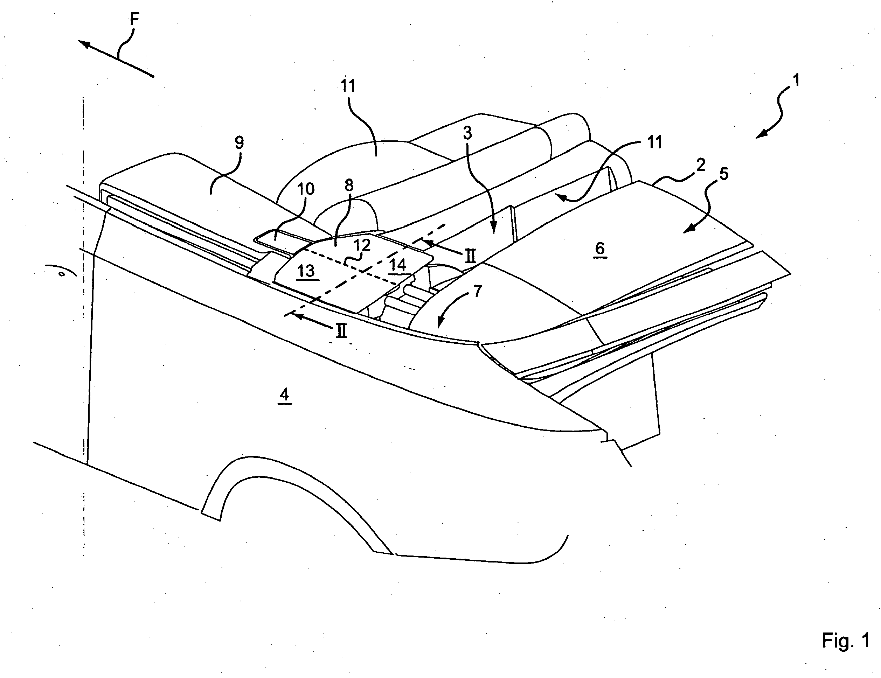

Das erfindungsgemäße Cabriolet-Fahrzeug 1 kann, wie in Fig. 1 angedeutet, sowohl ein mit einer Rückbank 11 versehenes vier- oder fünfsitziges Fahrzeug als auch ein Zweisitzer sein.

Dabei kann das bewegliche und in geschlossener Stellung mittelbar oder unmittelbar an einen Windschutzscheibenrahmen anschließende Dach 2 separate Dachteile mit zumindest jeweils einem starren Rahmen umfassen oder, wie hier angedeutet, ein insgesamt mit einem gemeinsamen Bezug überzogenes Soft-Top bilden. Das Dach 2 kann manuell oder voll- oder teilautomatisch zu bewegen sein.

Das Dach 2 ist hier zu seiner Öffnung im hinteren Fahrzeugbereich ablegbar, könnte alternativ auch teilweise auf einen hinteren Karosseriebereich auflegbar sein, wobei dann beispielsweise im wesentlichen nur seitliche Gestängeteile des Daches 2 in die Karosserie 4 absenkbar wären. In jedem Fall ist eine Eintrittsöffnung 3 in die Karosserie 4 vorgesehen, die je nach Ausbildung unterschiedlich groß sein kann. In dem in Fig. 1 gezeichneten Ausführungsbeispiel ist das Dach 2 über eine sog. Z-Faltung in der Karosserie 4 ablegbar, wobei das im geschlossenen Zustand mit einem Windschutzscheibenrahmen verbundene vordere Dachende 5 seine Orientierung im abgelegten Zustand beibehält, also mit der Außenseite 6 auch in abgelegter Stellung nach oben weist.

Dabei fallen die Querränder 7 des vorderen Dachendes 5 aufgrund der bombierten Dachform ab. Wenn der bezüglich der Fahrzeugquerrichtung mittlere Bereich des vorderen Dachendes 5 in etwa in der Ebene der Eintrittsöffnung 3 liegt, ragen daher die Querränder 7 weiter nach unten in die Karosserie 4. Bei geöffnetem Dach 2 kann somit dieses selbst mit seiner nach oben weisenden Seite 6 einen optischen Abschluß für einen wesentlichen Teil des mittleren Bereichs der Eintrittsöffnung 3 ausbilden. Ein übergreifender Deckel oder ähnliches ist dann hier entbehrlich. Aufgrund der abfallenden Querränder 7 ist außen hingegen eine gesonderte optische Abdeckung vorteilhaft, die einen Teil der seitlichen Ränder 7 übergreifen können, insbesondere auch seitliche Gestängeteile.

Es versteht sich, daß je nach Ausbildung der Eintrittsöffnung und der Dachablage auch andere Bereiche durch bewegliche Verkleidungsteile abdeckbar sein können.

Zur teilweisen Abdeckung der Eintrittsöffnung 3 sind erfindungsgemäß bewegliche Verkleidungsteile 8, 8a vorgesehen. In Figur 1 ist jeweils ein zur Fahrtrichtung F linkes Verkleidungsteil 8 in abdeckender Stellung schematisch dargestellt. Dabei kann beispielsweise dem Verkleidungsteil 8, 8a ein weiteres, schmaleres Verkleidungsteil 10 vorgeordnet sein, das in herkömmlicher Weise über eine schräg verlaufende Kulisse in eine Offenstellung unterhalb einer seitlichen Außenverkleidung 9 neben den Rücksitzen 11 verfahrbar ist. Die Verkleidungsteile 8, 8a können unterschiedlich groß und unterschiedlich geformt sein und etwa auch das Verkleidungsteil 10 mit umfassen.

In jedem Fall ist das Verkleidungsteil 8, 8a um zumindest eine Faltungsachse 12 (bzw. 12a, 12b im zweiten Ausführungsbeispiel) in zwei oder mehr Teilabschnitte 13, 14 bzw. 13a, 14a geteilt, die gegeneinander im ersten Ausführungsbeispiel um die Achse 12 schwenkbar sind.

In Figur 1 ist diese Achse 12 gestrichelt angedeutet, obwohl sie von oben in der hier vorliegenden Abdeckstellung, in der die Teilabschnitte 13, 14 fluchtend und im wesentlichen horizontal nebeneinander liegen, nicht sichtbar ist. Insbesondere ist noch nicht einmal eine Teilungsfuge sichtbar, wenn beide Teilabschnitte 13, 14 von einem gemeinsamen und für die Faltung u. U. dehnbaren Bezug B übergriffen sind, der seinerseits an die Farbe und Haptik der Innen- oder Außenausstattung des Fahrzeugs 1 angepaßt sein kann und im zweiten Ausführungsbeispiel eingezeichnet ist.

In der abdeckenden Stellung ist das Verkleidungsteil 8, 8a auf einer abgesenkten Stufe 15 der umgebenden Außenverkleidung 9 abgestützt und schließt damit mit seiner Außenfläche bündig mit dieser ab.

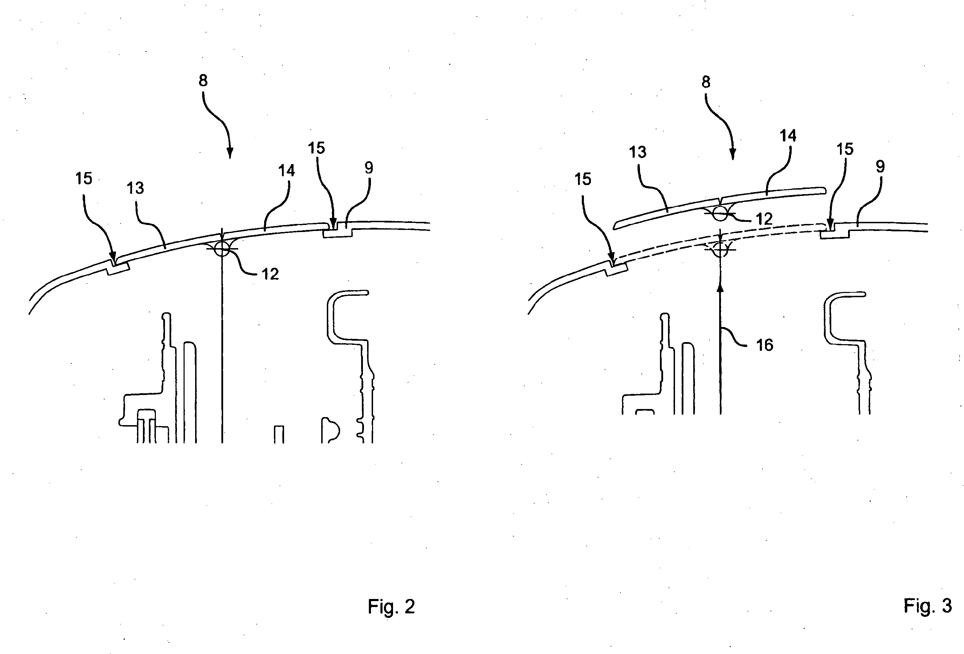

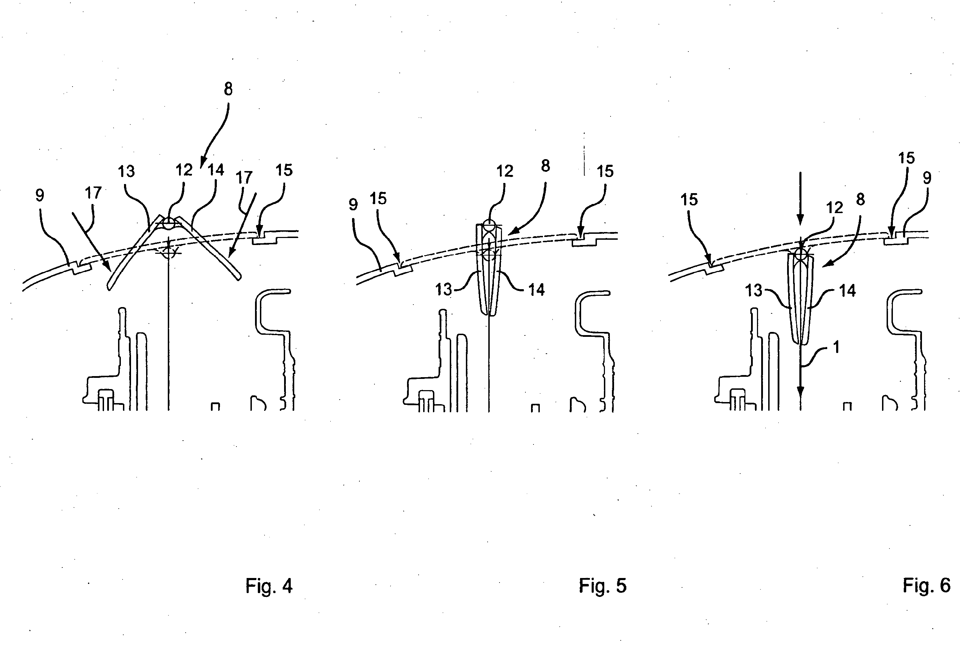

Im ersten Ausführungsbeispiel (Fig. 1 bis Fig. 6) sind die Verkleidungsteile 8 jeweils an angetriebenen Hubvorrichtungen 16 gehalten und werden zu ihrer Öffnung zunächst aus der Freigabestellung angehoben (Fig. 3), um eine Kollision mit der Stufe 15 zu umgehen, wenn die Teilabschnitte 13, 14 gleichzeitig mit dem Anheben oder nachfolgend (Fig. 4) in Richtung der Pfeile 17 um die Achse 12 aus der horizontalen Lage abwärts in eine nahezu vertikale Lage nach Art eines Regenschirms einfalten (Fig. 5), in der sie parallel und hier gegensinnig gewölbt zueinander stehen. Die Faltung der Teilabschnitte 13, 14 kann durch einen eigenen Antrieb bewirkbar oder mit dem Antrieb der Hubvorrichtung 16 gekoppelt sein.

In Figur 6 ist das seitliche Verkleidungsteil 8 in seiner Freigabestellung gezeigt. Dabei stehen die Teilabschnitte dicht nebeneinander in Hochkantstellung oder gegen die Vertikale nur um wenige Grad geneigt, so daß seitlich hiervon Raum für den Durchtritt von Gestängeteilen des Daches 2 verbleiben kann. Der Faltwinkel beträgt üblicherweise zwischen 70° und 100°. Dabei ist in dieser Freigabestellung das Verkleidungsteil 8 insgesamt unter die (zumeist gekrümmte) Ebene der Eintrittsöffnung 3 abgesenkt, jedoch muß die Absenkung aufgrund des verbleibenden Raumes neben den Teilabschnitten 13, 14 unter Umständen nicht so weit abwärts führen, wie dies ansonsten erforderlich wäre.

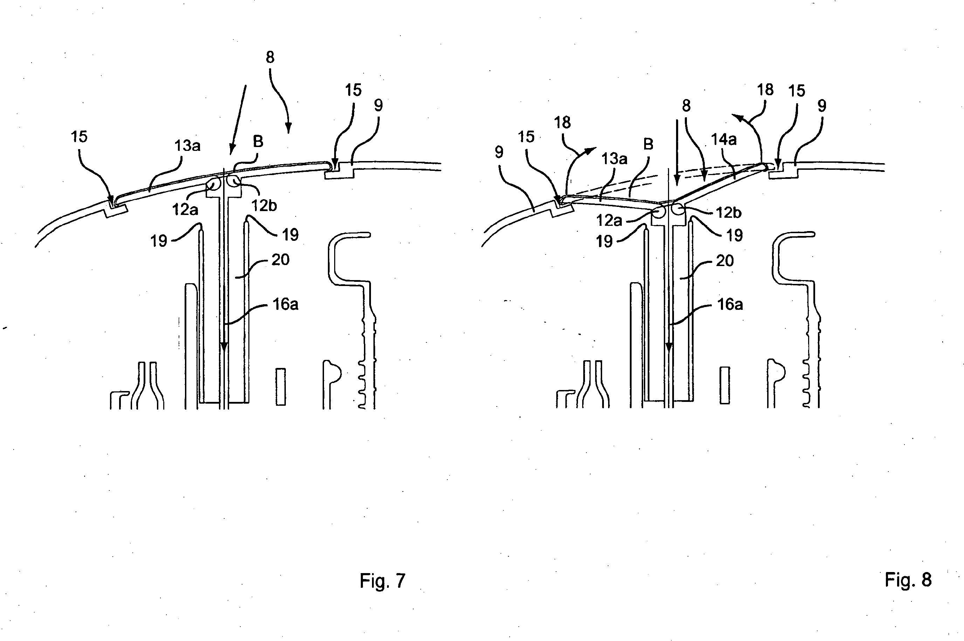

Im zweiten Ausführungsbeispiel (Fig. 7 bis Fig. 10) ist die Faltungsrichtung 18 der Teilabschnitte 13a, 14a gegenläufig zum ersten Ausführungsbeispiel. Dabei hat hier jeder Teilabschnitt 13a, 14a seine eigene Schwenkachse 12a, 12b, die jedoch beide parallel liegen und an einer gemeinsamen Hubvorrichtung 16a gehalten sind.

Die Teilabschnitte 13a, 14a sind hier im Auffaltungssinn (Fig. 7) vorgespannt und werden beim Abwärtsziehen durch die Hubvorrichtung 16a zunächst über die Stufen 15 zwangsweise in Richtung der Pfeile 18 eingeschwenkt.

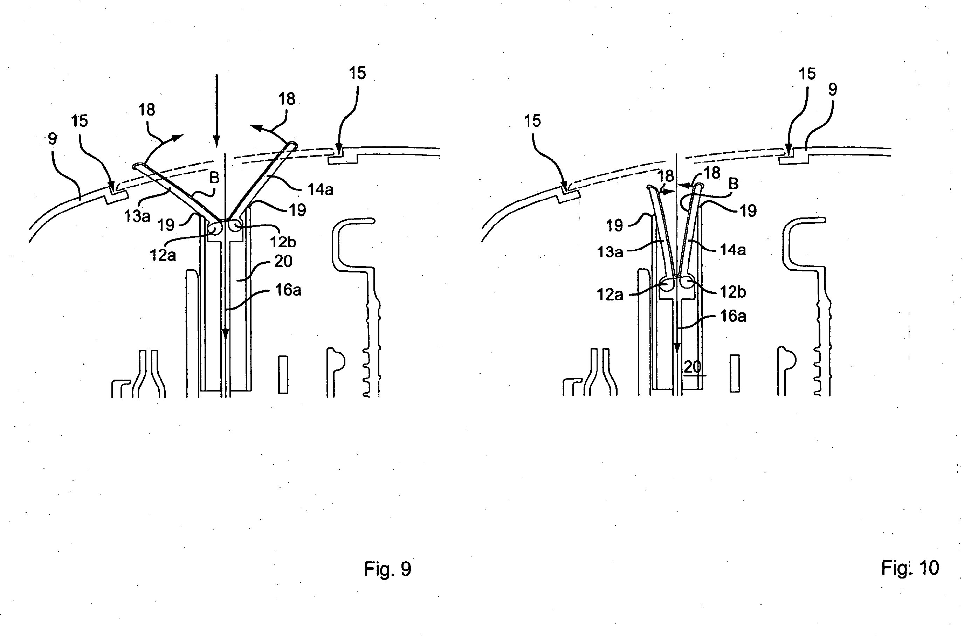

Sobald die Teilabschnitte 13a, 14a hinreichend weit eingeschwenkt sind, daß sie beim weiteren Absenken in die lichte Weite zwischen den Stufen 15 eintauchen können (Übergang von Fig. 8 zu Fig. 9), treten sie in Kontakt mit den Oberkanten 19 eines Führungskanals 20, in den die Teilabschnitte 13a, 14a sukzessive bei weiterer Abwärtsverlagerung eingezogen werden. Durch die als Zwangsführungen dienenden Oberkanten 19 wird dabei das weitere Einwärtsverschwenken entlang den Pfeilen 18 entgegen der aufspreizenden Federkraft bewirkt. Alternativ oder zusätzlich kann für die Faltbewegung auch hier ein eigener Antrieb vorgesehen sein.

Auch eine Kombination des ersten und zweiten Ausführungsbeispiels mit zum Beispiel drei nebeneinander liegenden Teilabschnitten ist möglich.

In den Ausführungsbeispielen sind die Verkleidungsteile 8, 8a sowohl bei geschlossenem Dach 2 als auch während der Dachbewegung in Freigabestellung und nur bei geöffnetem Dach 2 in Abdeckstellung. Abweichend hierzu, kann es auch möglich sein, ein Verkleidungsteil auch bei vollständig geschlossenem Dach in Abdeckstellung zu halten.

## Patentansprüche

1. Cabriolet-Fahrzeug (1) mit einem zumindest teilweise unterhalb einer Eintrittsöffnung (3) in der Karosserie (4) ablegbaren Dach (2), wobei Bereiche, insbesondere quer außen gelegene Bereiche, der Eintrittsöffnung (3) bei abgelegtem Dach (2) zumindest teilweise durch zwischen einer abdeckenden und einer freigebenden Stellung bewegliche Verkleidungsteile (8;8a) abdeckbar sind, wobei die Verkleidungsteile (8;8a) jeweils mit zumindest einer Faltungsachse (12;12a,12b) versehen sind, **dadurch gekennzeichnet, dass** Teilabschnitte (13,14; 13a,14a) der Verkleidungsteile (8;8a) in ihrer freigebenden Stellung um die Faltungsachse eingefaltet und in dieser gegeneinander eingefalteten Stellung als Paket in die Karosserie (4) abgesenkt sind.

2. Cabriolet-Fahrzeug (1) nach Anspruch 1
**dadurch gekennzeichnet,**
**daß** die Teilabschnitte (13,14;13a,14a) in abdeckender Stellung im wesentlichen fluchtend und nahezu horizontal nebeneinander liegen.

3. Cabriolet-Fahrzeug (1) nach einem der Ansprüche 1 oder 2,
**dadurch gekennzeichnet,**
**daß** die Teilabschnitte (13,14;13a,14a) eines Verkleidungsteils (8;8a) in freigebender Stellung nahezu hochkant und parallel zueinander stehen.

4. Cabriolet-Fahrzeug (1) nach einem der Ansprüche 1 bis 3,
**dadurch gekennzeichnet,**
**daß** den Verkleidungsteilen (13,14;13a,14a) zur Verlagerung zwischen der abdeckenden und der freigebenden Stellung eine Hubvorrichtung (16;16a) zugeordnet ist.

5. Cabriolet-Fahrzeug (1) nach einem der Ansprüche 1 bis 4,
**dadurch gekennzeichnet,**
**daß** Verkleidungsteile (8) aus der abdeckenden Stellung zunächst von einer seitlichen Auflagekante (15) anhebbar und die Teilabschnitte (13,14) in dieser zwischenstellung um die Faltungsachse(n) (12) abwärts verschwenkbar (17) sind.

6. Cabriolet-Fahrzeug (1) nach einem der Ansprüche 1 bis 4,
**dadurch gekennzeichnet,**
**daß** die Teilabschnitte (13a;14a) der Verkleidungsteile (8a) zur Verlagerung von der abdeckenden in die freigebende Stellung um die Faltungsachse(n) (12a;12b) aufwärts verschwenkbar (18) sind.

7. Cabriolet-Fahrzeug (1) nach Anspruch 6,
**dadurch gekennzeichnet,**
**daß** die Teilabschnitte (13a;14a) eines Verkleidungsteils (8a) im Auffaltungssinn vorgespannt sind und bei der Öffnung durch Zwangsführungen (15;19) in die eingeklappte Stellung gezwungen werden.

8. Cabriolet-Fahrzeug (1) nach einem der Ansprüche 1 bis 7,
**dadurch gekennzeichnet,**
**daß** die Faltungskante(n) (12;12a;12b) zumindest nahezu parallel zur Fahrzeuglängsrichtung verläuft oder verlaufen.

9. Cabriolet-Fahrzeug (1) nach einem der Ansprüche 1 bis 8,
**dadurch gekennzeichnet,**
**daß** die Teilabschnitte (13,14;13a;14a) des jeweiligen Verkleidungsteils (8;8a) von einem gemeinsamen Bezug (B) übergriffen sind.

10. Cabriolet-Fahrzeug (1) nach einem der Ansprüche 1 bis 9,
**dadurch gekennzeichnet,**
**daß** bei geöffnetem Dach (2) das vordere, bei geschlossenem Dach (2) mit einem Windschutzscheibenrahmen verbundene Dachende (5) in gleicher Orientierung abgelegt ist und seine bei geschlossenem Dach nach oben weisende Seite (6) eine optische Abschlußfläche für einen wesentlichen Teil des mittleren Bereichs der Eintrittsöffnung (3) ausbildet.

11. Cabriolet-Fahrzeug (1) nach Anspruch 10,
**dadurch gekennzeichnet,**
**daß** die Verkleidungsteile (8; 8a) bei geöffnetem Dach (2) seitlich und zumindest teilweise oberhalb von seitlichen Rändern (7) des vorderen Dachendes (5) liegen.

## Claims

1. A convertible vehicle (1) with a roof (2) which can be stowed at least partly below an entrance opening (3) in the vehicle body (4), some areas, in particular transversely outer areas, of the entrance opening (3) being coverable at least partly, when the roof (2) is folded down, by covering parts (8; 8a), which are movable between a covering position and an uncovering position, each of said covering parts (8; 8a) having at least one folding axis (12; 12a, 12b), **characterised in that** segments (13, 14; 13a, 14a) of the covering parts (8; 8a) in their uncovering position are folded in about the folding axis and are lowered into the vehicle body (4) as a pack in this mutually folded position.

2. The convertible vehicle (1) according to claim 1, **characterised in that** the segments (13, 14; 13a, 14a) are substantially aligned with each other and lie nearly horizontally next to each other in the covering position.

3. The convertible vehicle (1) according to any one of claims 1 or 2, **characterised in that** the segments (13, 14; 13a, 14a) of a covering part (8; 8a) are nearly upright and parallel to each other in the uncovering position.

4. The convertible vehicle (1) according to any one of claims 1 to 3, **characterised in that** a lifting device (16; 16a) is assigned to the covering parts (13, 14; 13a, 14a) for displacement between the covering position and the uncovering position.

5. The convertible vehicle (1) according to any one of claims 1 to 4, **characterised in that** covering parts (8) can be lifted, from the covering position, first from a lateral supporting edge (15), and the segments (13, 14) can be pivoted downwards (17) about the folding axis (axes) (12) in this intermediate position.

6. The convertible vehicle (1) according to any one of claims 1 to 4, **characterised in that** the segments (13a; 14a) of the covering parts (8a) can be pivoted upwards (18) about the folding axis (axes) (12a; 12b) for displacement from the covering position into the uncovering position.

7. The convertible vehicle (1) according to claim 6, **characterised in that** the segments (13a; 14a) of a covering part (8a) are pre-tensioned in the unfolding direction and are forced into the retracted position by restricted guidance means (15; 19) during opening.

8. The convertible vehicle (1) according to any one of claims 1 to 7, **characterised in that** the folding edge(s) (12; 12a; 12b) extend(s) at least approximately parallel to the longitudinal vehicle direction.

9. The convertible vehicle (1) according to any one of claims 1 to 8, **characterised in that** the segments (13, 14; 13a; 14a) of the respective covering part (8; 8a) have a joint cover (B) fitted round them.

10. The convertible vehicle (1) according to any one of claims 1 to 9, **characterised in that**, when the roof (2) is opened, the front roof end (5), which is connected to a windscreen frame when the roof (2) is closed, is stowed in the same orientation and its side (6), which faces upwards when the roof is closed, forms an optical end surface for a substantial part of the central area of the entrance opening (3).

11. The convertible vehicle (1) according to claim 10, **characterised in that** the covering parts (8; 8a) are placed laterally and at least partly above lateral edges (7) of the front roof end (5) when the roof (2) is opened.

## Revendications

1. Véhicule cabriolet (1) avec un toit (2) qui peut être rangé au moins partiellement au-dessous d'une ouverture d'entrée (3) dans la carrosserie (4), et lorsque le toit (2) est rangé, des régions de l'ouverture d'entrée (3), notamment des régions transversalement extérieures, peuvent être recouvertes au moins partiellement par des éléments d'habillage (8; 8a), qui sont déplaçables entre une position recouverte et une position découverte, chacun desdits éléments d'habillage (8; 8a) présentant au moins un axe de pliage (12; 12a, 12b), **caractérisé en ce que** des segments (13, 14; 13a, 14a) des éléments d'habillage (8; 8a), dans leur position découverte, sont pliés vers l'intérieur autour dudit axe de pliage et sont abaissés dans la carrosserie (4) sous forme d'un paquet dans cette position de pliage des uns contre les autres.

2. Véhicule cabriolet (1) selon la revendication 1, **caractérisé en ce que** les segments (13, 14; 13a, 14a) sont sensiblement alignés les uns par rapport aux autres et juxtaposés presque horizontalement dans la position recouverte.

3. Véhicule cabriolet (1) selon l'une quelconque des revendications 1 ou 2, **caractérisé en ce que** les segments (13, 14; 13a, 14a) d'un élément d'habillage (8; 8a) sont presque debout et parallèles les uns aux autres dans la position découverte.

4. Véhicule cabriolet (1) selon l'une quelconque des revendications 1 à 3, **caractérisé en ce qu'**un dispositif de levage (16; 16a) est associé avec les éléments d'habillage (13, 14; 13a, 14a) pour le déplacement entre la position recouverte et la position découverte.

5. Véhicule cabriolet (1) selon l'une quelconque des revendications 1 à 4, **caractérisé en ce que** des éléments d'habillage (8) peuvent être levés de la position recouverte, d'abord à partir d'un bord d'appui (15), et dans cette position intermédiaire, les segments (13, 14) peuvent être pivotés vers le bas (17) autour de l'axe (des axes) de pliage (12).

6. Véhicule cabriolet (1) selon l'une quelconque des revendications 1 à 4, **caractérisé en ce que** les segments (13a; 14a) des éléments d'habillage (8a) peuvent être pivotés vers le haut (18) autour de l'axe (des axes) de pliage (12a; 12b) pour le déplacement de la position recouverte vers la position découverte.

7. Véhicule cabriolet (1) selon la revendication 6, **caractérisé en ce que** les segments (13a; 14a) d'un élément d'habillage (8a) sont précontraints dans le sens de dépliage et sont contraints, lors de l'ouverture, vers la position pliée vers l'intérieur par des guidages forcés (15; 19).

8. Véhicule cabriolet (1) selon l'une quelconque des revendications 1 à 7, **caractérisé en ce que** le(s) bord(s) de pliage (12; 12a; 12b) s'étend(ent) au moins presque parallèlement à la direction longitudinale du véhicule.

9. Véhicule cabriolet (1) selon l'une quelconque des revendications 1 à 8, **caractérisé en ce que** les segments (13, 14; 13a; 14a) de l'élément d'habillage (8; 8a) respectif sont enveloppés par un recouvrement joint (B).

10. Véhicule cabriolet (1) selon l'une quelconque des revendications 1 à 9, **caractérisé en ce que**, lorsque le toit (2) est ouvert, l'extrémité de toit avant (5), reliée à un cadre de pare-brise lorsque le toit (2) est fermé, est rangée dans la même orientation et sa face (6) dirigée vers le haut lorsque le toit est fermé, constitue une face de terminaison optique pour une partie essentielle de la région centrale de l'ouverture d'entrée (3).

11. Véhicule cabriolet (1) selon la revendication 10, **caractérisé en ce que** les éléments d'habillage (8; 8a) sont disposés latéralement et au moins partiellement au-dessus de bords latéraux (7) de l'extrémité de toit avant (5) lorsque le toit (2) est ouvert.
